# EUROPÄISCHE PATENTSCHRIFT

(11) **EP 4 127 500 B1**
(45) Veröffentlichungstag und Bekanntmachung des Hinweises auf die Patenterteilung: **24.01.2024**
(21) Anmeldenummer: 21711836.3
(22) Anmeldetag: 10.03.2021
(51) Int. Cl.: F16D 3/78, F16D 3/62, F16D 3/72, B61C 9/38

(54) **BEWEGLICHE DOPPELKUPPLUNG ZUM VERSATZAUSGLEICHENDEN VERBINDEN ZWEIER WELLEN**
YIELDING DOUBLE COUPLING FOR CONNECTING TWO SHAFTS WITH OFFSET COMPENSATION
ACCOUPLEMENT DOUBLE EXTENSIBLE POUR LE RACCORDEMENT DE DEUX ARBRES AVEC COMPENSATION DE DÉCALAGE

(30) Priorität: 25.03.2020 DE 102020203865
(43) Veröffentlichungstag der Anmeldung: 08.02.2023
(73) Patentinhaber: ZF Friedrichshafen AG, 88046 Friedrichshafen (DE)
(72) Erfinder: KETTLITZ, Mario, 88250 Weingarten (DE)
(74) Vertreter: ZF Friedrichshafen AG
(86) Internationale Anmeldenummer: PCT/EP2021/056002
(87) Internationale Veröffentlichungsnummer: WO 2021/190924

(56) Entgegenhaltungen:
- DE-A1-102012 002 660
- DE-A1-102013 222 753
- DE-A1-102014 204 224
- DE-A1-102015 016 411
- FR-A- 442 711
- US-A- 1 546 755

## Beschreibung

Die vorliegende Erfindung betrifft eine Ausgleichskupplung zum versatzausgleichenden Verbinden zweier Wellen, insbesondere für den Einsatz in einem Antriebsstrang eines Schienenfahrzeugs.

Insbesondere in teilabgefederten Antriebssträngen von Schienenfahrzeugen werden nichtschaltbare Ausgleichskupplungen zwischen einer Antriebswelle eines elektrischen Antriebsmotors und einer Getriebeeingangswelle eines Radsatzgetriebes angeordnet, um das Antriebsdrehmoment des Antriebsmotors auf das Radsatzgetriebe zu übertragen. Diese Anordnung wird antriebsseitiger Einsatz genannt. Dabei ist der Antriebsmotor in der Regel an einem gefederten Drehgestell des Schienenfahrzeugs aufgehängt, während das Radsatzgetriebe als achsreitendes Getriebe ausgeführt ist und sich direkt auf einer ungefederten Achswelle, der Radsatzwelle, abstützt. Aufgrund dieser teilabgefederten Anordnung von Antriebsmotor und Radsatzgetriebe ergeben sich Relativbewegungen des gefederten Elektromotors gegenüber dem ungefederten Radsatzgetriebe. Die dadurch verursachten Versätze zwischen der Antriebswelle und der Getriebeeingangswelle im Fahrbetrieb können durch die Ausgleichskupplung ausgeglichen werden. Zwischen dem Antriebsmotor und dem Radsatzgetriebe ist in der Regel sehr wenig Bauraum vorhanden, sodass eine Ausgleichskupplung möglichst geringe Abmessungen aufweisen und trotzdem eine zuverlässige Übertragung hoher Drehmomente gewährleisten soll.

Aus der gattungsbildenden DE 10 2013 222 753 A1 ist eine Doppel-Torsionskupplung zum versatzausgleichenden Verbinden zweier Wellen für den antriebsseitigen Einsatz in einem Schienenfahrzeug bekannt. Diese Doppel-Torsionskupplung umfasst eine erste und eine zweite Torsionskupplung sowie ein Zwischenstück, das die erste und die zweite Torsionskupplung miteinander verbindet. Jede der beiden Torsionskupplungen umfasst einen Verbindungsflansch zur Verbindung mit einer der zu verbindenden Wellen, sowie ein mit dem Verbindungsflansch verbundenes elastisches Verbindungselement. Die beiden elastischen Verbindungselemente sind wiederum mit dem Zwischenstück verbunden. Das Zwischenstück besteht dabei aus einem ersten und einem zweiten Teilstück, die lösbar miteinander verbunden sind.

Die Aufgabe der vorliegenden Erfindung ist es, eine Ausgleichskupplung zum versatzausgleichenden Verbinden zweier Wellen zu schaffen, die insbesondere im Hinblick auf einen materialsparenden Aufbau und eine zuverlässige Übertragung hoher Drehmomente über eine lange Lebensdauer weiter verbessert ist.

Diese Aufgabe wird durch eine Ausgleichskupplung mit den Merkmalen von Anspruch 1 gelöst. Vorteilhafte Ausführungen sind in den abhängigen Ansprüchen angegeben.

Es wird eine Ausgleichskupplung mit einem ersten Verbindungsflansch zur Verbindung mit einer Antriebswelle und mit einem zweiten Verbindungsflansch zur Verbindung mit einer getriebenen Welle vorgeschlagen. Ferner ist zumindest ein erstes elastisches Ausgleichselement vorgesehen, das mit dem ersten Verbindungsflansch verbunden ist und ein zweites elastisches Ausgleichselement, das mit dem zweiten Verbindungsflansch verbunden ist. Des Weiteren umfasst die Ausgleichskupplung ein Mittelstück, welches zwischen dem ersten und dem zweiten elastischen Ausgleichselement angeordnet und mit diesen beiden verbunden ist. Dabei besteht das Mittelstück zumindest aus einem ersten Mittelstückelement und aus einem zweiten Mittelstückelement, die trennbar miteinander verbunden sind. An dem ersten und an dem zweiten Mittelstückelement sind jeweils mehrere Kraftangriffspunkte zur Verbindung mit dem jeweils zugeordneten elastischen Ausgleichselement angeordnet. Die Kraftangriffspunkte sind mit einem radialen Abstand zu einer Rotationsachse jedes Mittelstückelements angeordnet, um ein Drehmoment übertragen zu können. Ferner können die Kraftangriffspunkte gleichmäßig verteilt über den Umfang jedes Mittelstückelements angeordnet sein. Die Kraftangriffspunkte sind nicht zwangsläufig Punkte im geometrischen Sinne, sondern Stellen an dem Mittelstückelement, an denen Verbindungselemente befestigt sind, welche das Mittelstückelement mit den anderen Bauteilen verbinden. Beispielsweise kann der Kraftangriffspunkt eine Durchgangsbohrung oder eine Gewindebohrung in dem Mittelstückelement sein, in der eine Schraube zur Verbindung mit dem elastischen Ausgleichselement befestigbar ist.

Jeweils zwischen zwei benachbarten Kraftangriffspunkten ist eine Rippe mit einer sich in axialer Richtung erstreckenden Höhe angeordnet. Die Rippen zwischen den Kraftangriffspunkten der Mittelstückelemente liegen sozusagen in einer Kraftrichtung und erhöhen die Steifigkeit der einzelnen Mittelstückelemente. Folglich erhöht sich die Steifigkeit des zusammengebauten Mittelstücks. Dadurch kann die maximal übertragbare Antriebsleistung bzw. das maximal übertragbare Drehmoment der Ausgleichskupplung bei minimalem Materialeinsatz erhöht werden. Unter einer Rippe wird eine verstärkende Ausformung verstanden, die sich entlang einer Kraftrichtung erstreckt. Die Rippen können beispielsweise in einem Gussverfahren einstückig mit dem Rest des zugeordneten Mittelstückelements hergestellt werden.

Vorzugsweise sind die Rippen des ersten Mittelstückelements und des zweiten Mittelstückelements so gestaltet, dass sie auf ihrer dem jeweils zugeordneten elastischen Ausgleichselement zugewandten Seite Freiräume aufweisen, die im Betrieb für Bewegungen des Mittelstücks erforderlich sind, welche durch den Versatzausgleich verursacht werden. Die Rippen können dagegen den Bauraum ausfüllen, der für die Freigängigkeit der Ausgleichskupplung nicht erforderlich ist, und erhöhen damit die Stabilität und die Drehmomentbelastbarkeit der Ausgleichskupplung.

Im Hinblick auf einen minimalen Materialeinsatz ist gemäß einer Ausführung vorgesehen, dass die Rippe geradlinig von einem Kraftangriffspunkt in Richtung des benachbarten Kraftangriffspunkts verläuft. Dadurch ergibt sich eine zumindest annähernd polygonförmige Anordnung der Rippen. Dementsprechend können auch die beiden Mittelstückelemente und das zusammengebaute Mittelstück eine polygonförmige Grundform aufweisen. Es ergibt sich dadurch eine besonders leichte und materialsparende Bauweise bei verhältnismäßig hohem übertragbarem Drehmoment. In den Eckbereichen jedes polygonförmigen Mittelstückelements ist jeweils einer der genannten Kraftangriffspunkte angeordnet.

Erfindungsgemäß verändert sich die Höhe der Rippe von einem Kraftangriffspunkt hin zu einem benachbarten weiteren Kraftangriffspunkt und dabei nimmt die Höhe der Rippe von einem Kraftangriffspunkt hin zu dem im Umfangsrichting benachbarten Kraftangriffspunkt ab, während die Höhe von einer benachbarten Rippe von dem benachbarten Kraftangriffspunkt zu dem nächsten Kraftangriffspunkt wieder zunimmt. Mit einer solchen Ausführung können die Rippen den Bauraum ausfüllen, der für die Freigängigkeit der Ausgleichskupplung nicht erforderlich ist. Dies hat folgenden Hintergrund. Das Mittelstück führt im Betrieb wegen der auszugleichenden Versätze zwischen den zu verbindenden Wellen eine Taumelbewegung aus während sich die elastischen Ausgleichselemente entsprechend verformen. Hätten die Rippen zwischen den Kraftangriffspunkten nun eine gleichbleibende Höhe, so käme es an bestimmten Stellen durch die Taumelbewegung zu Bauteilkollisionen. Solche Bauteilkollisionen würden insbesondere zwischen den Rippen und Flanschverschraubungen auftreten, mit denen die elastischen Ausgleichselemente an dem jeweils zugeordneten Verbindungsflansch befestigt sind. Die Ausgleichskupplung hätte nicht die erforderliche Freigängigkeit.

Die beiden Mittelstückelemente sind also mit anderen Worten so gestaltet, dass sich auf ihrer dem jeweils zugeordneten elastischen Ausgleichselement zugewandten Seite Freiräume ergeben, die für den Freigang der Flanschverschraubungen in einem durch den Versatzausgleich verursachten verlagerten Zustand erforderlich sind. Insbesondere Schraubenköpfe der Flanschverschraubungen sind hierbei kollisionsgefährdet.

Die Kraftangriffspunkte jedes Mittelstückelements können jeweils in Umfangsrichtung abwechselnd angeordnete Durchgangsbohrungen und Gewindebohrungen umfassen. Die Durchgangsbohrungen und die Gewindebohrungen dienen dabei jeweils einer Verschraubung, mit der die beiden Mittelstückelemente miteinander und/oder mit jeweils einem zugeordneten elastischen Ausgleichselement verbunden sind. Über diese Verschraubungen kann eine Antriebsleistung bzw. entsprechende Drehmomente und Kräfte von einem der elastischen Ausgleichselemente auf das Mittelstück und von dem Mittelstück auf das jeweils andere elastische Ausgleichselement übertragen werden. Jede der genannten Verschraubungen kann dazu eine Schraube umfassen, die durch das elastische Ausgleichselement und durch die Durchgangsbohrung des einen Mittelstückelements hindurchgesteckt und in der Gewindebohrung des anderen Mittelstückelements festgeschraubt ist. Die Durchgangs- und Gewindebohrungen oder gegebenenfalls Formschlusselemente dienen somit als Kraftangriffspunkte des Mittelstücks und der einzelnen Mittelstückelemente. Formschlusselemente können beispielsweise als ineinander greifende Zapfen und Senkungen oder Ausnehmungen und Vorsprünge ausgeführt sein. Formschlusselemente können im Betrieb einen wesentlichen Anteil des Drehmoments übertragen. Die Verschraubungen dienen dann im Wesentlichen dem axialen Zusammenhalten der Bauteile.

Durch Verdrehen der beiden Mittelstückelemente gegeneinander können solche Formschlusselemente zur Deckung gebracht und danach ineinandergeschoben werden, sodass sie einen Formschluss bilden. Der Formschluss zwischen den beiden Mittelstückelementen ermöglicht ein hohes übertragbares Drehmoment. Der genannte Formschluss kann so ausgeführt sein, dass er durch axiales Auseinanderschieben der beiden Mittelstückelemente trennbar ist. Bei dem axialen Auseinanderschieben werden die elastischen Ausgleichselemente axial verformt.

Um einen gleichmäßigen Lauf und möglichst gleichmäßige Belastung aller Bauteile der Ausgleichskupplung zu erreichen ist der radiale Abstand aller Kraftangriffspunkte zu einer Rotationsachse des Mittelstücks vorzugsweise gleich groß. Die Richtungsangaben radial und axial in dieser Schrift beziehen sich auf die Rotationsachse des Mittelstücks, sofern nicht ausdrücklich anders angegeben.

Gemäß einer Ausführung ist das erste Mittelstückelement und das zweite Mittelstückelement so ausgeführt, dass bei dem zusammengebauten Mittelstück jeweils eine Rippe des ersten und des zweiten Mittelstückelements in einer gemeinsamen Ebene liegen. Die beiden in einer gemeinsamen Ebene liegenden Rippen können so eine Betriebskraft bzw. ein Drehmoment gemeinsam übertragen. Jede einzelne Rippe kann dadurch materialsparend und leichter ausgeführt sein. Dabei kann besonders bevorzugt vorgesehen sein, dass die Summe der Höhen der beiden in der gemeinsamen Ebene liegenden Rippen zwischen zwei benachbarten Kraftangriffspunkten zumindest annähernd konstant bleibt. Dies wird insbesondere dadurch erreicht, dass bei den beiden in der gemeinsamen Ebene liegenden Rippen die Höhe der einen Rippe in einer Richtung im gleichen Maße abnimmt wie die Höhe der anderen Rippe in derselben Richtung zunimmt.

Gemäß einer weiteren Ausführung können das erste Mittelstückelement und das zweite Mittelstückelement identisch ausgebildet sein. Diese Ausführung erleichtert die Herstellung durch höhere Stückzahlen und reduziert Produktions- und Lagerhaltungskosten. Die Mittelstückelemente können beispielsweise als Gussteile hergestellt werden.

Die beiden elastischen Ausgleichselemente können als Gelenkscheiben ausgeführt sein. Derartige Gelenkscheiben werden auch Hardyscheiben genannt. Die elastischen Ausgleichselemente können vorteilhaft jeweils als eine fadenverstärkte Elastomerscheibe ausgeführt sein. Bei einer alternativen Ausführung kann jedes elastische Ausgleichselement auch aus einzelnen elastischen fadenverstärkten Laschen bestehen, die zu einem Laschenverbund zusammengesetzt sind. Bei den fadenverstärkten Elastomerscheiben bzw. Elastomerlaschen können Fadenpakete in einem Elastomerkörper eingebettet sein, wobei die Fadenpakete den überwiegenden Teil der Last bei der Drehmomentübertragung aufnehmen. Der Elastomerkörper kann die Fadenpakete zusammenhalten bzw. in einer gewünschten Position halten sowie vor äußeren Einflüssen schützen. Im Vergleich zu herkömmlichen elastischen Ausgleichselementen, beispielsweise Metalllaschen, haben fadenverstärkte Ausgleichselemente mit einem Elastomerkörper den Vorteil, dass sie Stöße, insbesondere Drehmomentstöße, sowie Schwingungen im Antriebsstrang dämpfen.

Die Verbindungsflansche können jeweils einen Nabenbereich aufweisen, der sich zur drehfesten Verbindung mit der Antriebswelle bzw. mit der getriebenen Welle eignet. Der Nabenbereich kann an einem Innenumfang beispielsweise eine Innenverzahnung für eine formschlüssige Verbindung oder eine bearbeitete zylindrische Fläche für eine Pressverbindung mit der zu verbindenden Welle aufweisen. Ausgehend von dem Nabenbereich eines Verbindungsflansches können sich mehrere Befestigungsabschnitte in radialer Richtung erstrecken. So können sich beispielsweise mehrere gleichmäßig über den Umfang verteilte Befestigungsarme von dem Nabenbereich radial nach außen erstrecken. In dem radial äußeren Bereich der Befestigungsarme können diese mittels der Befestigungsmittel mit dem zugeordneten elastischen Ausgleichselement verbunden sein. Die Nabenbereiche der beiden Verbindungsflansche können vorteilhaft radial innerhalb der elastischen Verbindungselemente angeordnet sein, wodurch sich eine in axialer Richtung kurze Bauform der Ausgleichskupplung ergibt.

Im Folgenden wird die Erfindung und deren Vorteile anhand der in den anliegenden Figuren abgebildeten Ausführungsbeispiele noch näher erläutert.

Dabei zeigen
Fig. 1 eine erfindungsgemäße Ausgleichskupplung in einer Seitenansicht und
Fig. 2 das Mittelstück der Ausgleichskupplung aus der Fig. 1 in einer perspektivischen Ansicht.

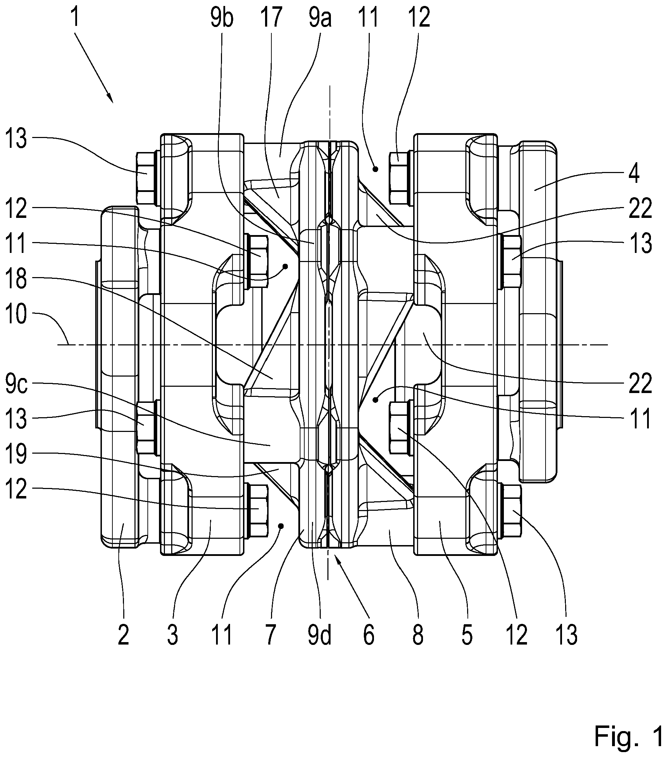

Die in der Fig. 1 dargestellte Ausgleichskupplung 1 ist zum versatzausgleichenden Verbinden zweier Wellen in einem Antriebsstrang eines Schienenfahrzeugs vorgesehen. Sie kann dabei insbesondere im Kraftfluss zwischen einem Antriebsmotor und einem nachgelagerten Getriebe angeordnet werden. Die Ausgleichskupplung 1 soll dabei das Antriebsdrehmoment des Antriebsmotors auf ein Radsatzgetriebe eines Schienenfahrzeugs übertragen und gleichzeitig Verlagerungen ausgleichen. Verlagerungen können in Form von axialen, radialen und winkeligen Versätzen zwischen einer Antriebswelle und einer getriebenen Welle ausgleichen. Im vorliegenden Beispiel entspricht die Antriebswelle der Motorwelle des Antriebsmotors und die getriebene Welle entspricht der Getriebeeingangswelle eines Gangwechselgetriebes. Die Versätze können zumindest teilweise bereits im Stillstand vorliegen. Wesentliche Anteile der Versätze ergeben sich jedoch im Fahrbetrieb, beispielsweise durch Schwingungen im Antriebsstrang des Schienenfahrzeugs.

Die Ausgleichskupplung 1 umfasst einen ersten Verbindungsflansch 2 zur Verbindung mit der Antriebswelle und ein erstes elastisches Ausgleichselement 3, welches mittels Flanschverschraubungen 12 mit dem ersten Verbindungsflansch 2 verbunden ist. Die Ausgleichskupplung 1 umfasst ferner einen zweiten Verbindungsflansch 4 zur Verbindung mit einer getriebenen Welle und ein zweites elastisches Ausgleichselement 5, welches mittels weiterer Flanschverschraubungen 12 mit dem zweiten Verbindungsflansch 4 verbunden ist. Jedes der beiden elastischen Ausgleichselemente 3 und 5 ist als eine fadenverstärkte Elastomerscheibe ausgeführt.

Zwischen dem ersten elastischen Ausgleichselement 3 und dem zweiten elastischen Ausgleichselement 5 ist ein Mittelstück 6 angeordnet. Das Mittelstück 6 ist zweiteilig ausgeführt. Es umfasst ein erstes Mittelstückelement 7 und ein zweites Mittelstückelement 8. Die beiden Mittelstückelemente 7 und 8 sind mittels Mittelstückverschraubungen 13 miteinander verbunden. Die Mittelstückverschraubungen 13 umfassen jeweils eine Schraube, die sich durch das jeweilige elastische Ausgleichselement 3 bzw. 5 und durch eine Durchgangsbohrung 14 in einem Mittelstückelement 8, 7 hindurch erstreckt und in einer Gewindebohrung 15 des anderen Mittelstückelements 7, 8 verschraubt ist. Auf diese Weise halten die Mittelstückverschraubungen 13 die beiden Mittelstücke 7 und 8 zusammen und verbinden diese gleichzeitig mit den beiden elastischen Ausgleichselementen 3 und 5.

Jeder Flanschverschraubung 12 liegt jeweils eine zugeordnete Mittelstückverschraubung 13 in axialer Richtung gegenüber. Die axiale Richtung bezieht sich auf die Richtung der Rotationsachse 10. Die Rotationsachse 10 entspricht zumindest annähernd der Rotationsachse des Mittelstücks 6 und der gesamten Ausgleichskupplung 1 im Betrieb. Aufgrund der eingangs beschriebenen Versätze zwischen der Antriebswelle und der getriebenen Welle wird das Mittelstück 6 im Betrieb jedoch eine Taumelbewegung ausführen, sodass nicht alle Bauteile der Ausgleichskupplung 1 exakt um die Rotationsachse 10 rotieren. Mit der beschriebenen Taumelbewegung des Mittelstücks 6 bewegen sich auch die Mittelstückverschraubungen 13, während sich die elastischen Ausgleichselemente 3 und 5 entsprechend verformen.

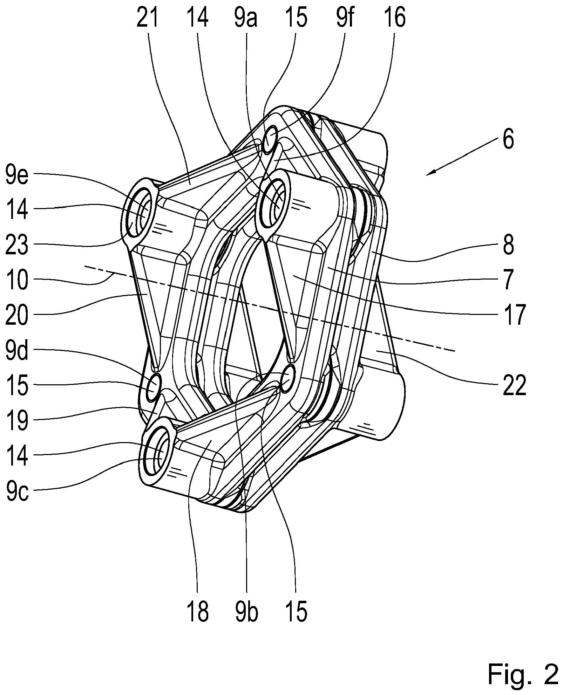

Das aus dem ersten Mittelstückelement 7und dem zweiten Mittelstückelement 8 zusammengesetzte Mittelstück 6 ist separat in der Fig. 2 dargestellt. An dem ersten und an dem zweiten Mittelstückelement 7 und 8 sind jeweils mehrere Kraftangriffspunkte 9a, 9b, 9c, 9d, 9e, 9f zur Verbindung mit dem jeweils zugeordneten elastischen Ausgleichselement 3, 5 angeordnet. Als Kraftangriffspunkte 9a, 9b, 9c, 9d, 9e, 9f dienen bei diesem Ausführungsbeispiel Durchgangsbohrungen 14 und Gewindebohrungen 15, die in jedem Mittelstückelement 7 und 8 angeordnet sind. Die Kraftangriffspunkte 9a, 9b, 9c, 9d, 9e, 9f sind in Fig. 1 und Fig. 2 der Übersichtlichkeit halber jeweils nur an dem ersten Mittelstückelement 7 eingezeichnet. Da die beiden Mittelstückelemente 7 und 8 in diesem Beispiel jedoch identisch ausgebildet sind, existieren gleiche Kraftangriffspunkte auch an dem zweiten Mittelstückelement 8.

Die Kraftangriffspunkte 9a, 9b, 9c, 9d, 9e, 9f sind alle mit dem gleichen radialen Abstand zu der Rotationsachse 10 jedes Mittelstückelements 7, 8 angeordnet. In axialer Blickrichtung liegen die Kraftangriffspunkte 9a, 9b, 9c, 9d, 9e, 9f also alle auf einer gemeinsamen Kreislinie. Zwischen zwei benachbarten Kraftangriffspunkten 9a, 9b, 9c, 9d, 9e, 9f ist jeweils eine Rippe 16, 17, 18, 19, 20, 21, 22 mit einer sich in axialer Richtung erstreckenden Höhe angeordnet. Die Rippen 16, 17, 18, 19, 20, 21, 22 verlaufen alle geradlinig von einem Kraftangriffspunkt 9a, 9b, 9c, 9d, 9e, 9f in Richtung eines benachbarten Kraftangriffspunktes. Die Höhe jeder Rippe 16, 17, 18, 19, 20, 21, 22 verändert sich von einem Kraftangriffspunkt 9a, 9b, 9c, 9d, 9e, 9f zu dem jeweils benachbarten Kraftangriffspunkt 9a, 9b, 9c, 9d, 9e, 9f.

Von den als erste Kraftangriffspunkte 9a, 9c, 9e dienenden Durchgangsbohrungen 14 hin zu den als zweite Kraftangriffspunkte 9b, 9d, 9f dienenden Gewindebohrungen 15 nimmt die Höhe jeder Rippe 16, 17, 18, 19, 20, 21, 22 jeweils kontinuierlich ab. Die Durchgangsbohrungen 14 und die Gewindebohrungen 15 sind in Umfangsrichtung abwechselnd angeordnet. Jede der Rippen 16, 17, 18, 19, 20, 21, 22 hat an dem jeweils zugeordneten ersten Kraftangriffspunkt 9a, 9c, 9e, also an der Durchgangsbohrung 14, ihre maximale Höhe und an dem jeweils zugeordneten zweiten Kraftangriffspunkt 9b, 9d, 9f, der Gewindebohrung, ihre minimale Höhe.

Die Höhe einer Rippe 17 nimmt von einem Kraftangriffspunkt 9a hin zu dem in Umfangsrichtung benachbarten Kraftangriffspunkt 9b ab, während die Höhe einer benachbarten Rippe 18 von dem benachbarten Kraftangriffspunkt 9b hin zu dem in Umfangsrichtung nächsten Kraftangriffspunkt 9c wieder zunimmt. Durch diese Anordnung und diesen Höhenverlauf der Rippen 16, 17, 18, 19, 20, 21, 22 ergeben sich Freiräume 11 im Bereich der Flanschverschraubungen 12. Diese Freiräume 11 sind erforderlich um dem Mittelstück 6 die oben beschriebenen Taumelbewegungen zu ermöglichen, ohne dass es zu Bauteilkollisionen kommt. Die beiden Mittelstückelemente 7 und 8 sind also so gestaltet, dass sie auf ihrer dem jeweils zugeordneten elastischen Ausgleichselement 3 bzw. 5 zugewandten Seite Freiräume 11 aufweisen, die für den Freigang der Schraubenköpfe der Flanschverschraubungen 12 erforderlich sind. Die Rippen 16, 17, 18, 19, 20, 21, 22 füllen den Bauraum aus, der für die Freigängigkeit der Ausgleichskupplung 1 nicht erforderlich ist und erhöhen damit die Stabilität und die Drehmomentbelastbarkeit der Ausgleichskupplung 1.

Das erste Mittelstückelement 7 und das zweite Mittelstückelement 8 sind so ausgeführt und zusammengebaut, dass bei dem zusammengebauten Mittelstück 6 jeweils eine Rippe 17 des ersten Mittelstückelements 7 und eine Rippe 22 des zweiten Mittelstückelements 8 in einer gemeinsamen Ebene liegen. Dabei bleibt die Summe der Höhen der beiden in der gemeinsamen Ebene liegenden Rippen 17, 22 zwischen zwei benachbarten Kraftangriffspunkten 9c und 9d konstant. Somit ist die summierte Höhe der Rippen 16, 17, 18, 19, 20, 21, 22 des ersten und des zweiten Mittelstückelements 7, 8 zwischen allen Kraftangriffspunkten 9a, 9b, 9c, 9d, 9e, 9f und über den ganzen Umfang des Mittelstücks 6 gleich groß. Es kann ein hohes maximales Drehmoment übertragen werden.

Die Durchgangsbohrungen 14 weisen Formschlusselemente 23 in Form von Senkungen am Bohrungsende auf. Im montierten Zustand der Ausgleichskupplung 1 greift jeweils das Ende einer Buchse des zugeordneten elastischen Ausgleichselementes 3, bzw. 5 in diese Senkungen ein, sodass ein Formschluss besteht. Über die Formschlusselemente 23 kann im Betrieb der wesentliche Anteil des Drehmoments übertragen werden. Ähnliche Formschlusselemente können auch zwischen den beiden Mittelstückelementen angeordnet sein, um ein hohes übertragbares Drehmoment zu gewährleisten.

### Bezugszeichen

- 1: Ausgleichskupplung
- 2: erster Verbindungsflansch
- 3: erstes elastisches Ausgleichselement
- 4: zweiter Verbindungsflansch
- 5: zweites elastisches Ausgleichselement
- 6: Mittelstück
- 7: erstes Mittelstückelement
- 8: zweites Mittelstückelement
- 9a - 9f: Kraftangriffspunkte
- 10: Rotationsachse
- 11: Freiraum
- 12: Flanschverschraubung
- 13: Mittelstückverschraubung
- 14: Durchgangsbohrung
- 15: Gewindebohrung
- 16: Rippe
- 17: Rippe
- 18: Rippe
- 19: Rippe
- 20: Rippe
- 21: Rippe
- 22: Rippe
- 23: Formschlusselement

## Patentansprüche

1. Ausgleichskupplung (1) zum versatzausgleichenden Verbinden zweier Wellen, insbesondere für den Einsatz in einem Antriebsstrang eines Schienenfahrzeugs,
mit einem ersten Verbindungsflansch (2) zur Verbindung mit einer Antriebswelle,
mit zumindest einem ersten elastischen Ausgleichselement (3), das mit dem ersten Verbindungsflansch (2) verbunden ist,
mit einem zweiten Verbindungsflansch (4) zur Verbindung mit einer getriebenen Welle,
mit zumindest einem zweiten elastischen Ausgleichselement (5), das mit dem zweiten Verbindungsflansch (4) verbunden ist, und
mit einem Mittelstück (6), welches zwischen dem ersten und dem zweiten elastischen Ausgleichselement (3, 5) angeordnet ist,
wobei das Mittelstück (6) zumindest ein erstes Mittelstückelement (7) und ein zweites Mittelstückelement (8) aufweist, die trennbar miteinander verbunden sind,
und wobei an dem ersten Mittelstückelement (7) und an dem zweiten Mittelstückelement (8) jeweils mehrere Kraftangriffspunkte (9a, 9b, 9c, 9d, 9e, 9f) zur Verbindung mit dem jeweils zugeordneten elastischen Ausgleichselement (3, 5) angeordnet sind, wobei jeweils zwischen zwei benachbarten Kraftangriffspunkten (9a, 9b, 9c, 9d, 9e, 9f) eine Rippe (16, 17, 18, 19, 20, 21, 22) mit einer sich in axialer Richtung erstreckenden Höhe angeordnet ist, wobei sich die Höhe jeder Rippe (16, 17, 18, 19, 20, 21, 22) von einem Kraftangriffspunkt (9a, 9b, 9c, 9d, 9e, 9f) hin zu einem benachbarten Kraftangriffspunkt (9a, 9b, 9c, 9d, 9e, 9f) verändert, **dadurch gekennzeichnet, dass** die Höhe einer Rippe (16, 17, 18, 19, 20, 21, 22) von einem Kraftangriffspunkt (9a) hin zu dem in Umfangsrichtung benachbarten Kraftangriffspunkt (9b) abnimmt, und dass die Höhe von einer benachbarten Rippe (16, 17, 18, 19, 20, 21, 22) von dem benachbarten Kraftangriffspunkt (9b) zu dem nächsten Kraftangriffspunkt (9c) wieder zunimmt.

2. Ausgleichskupplung (1) nach Anspruch 1, **dadurch gekennzeichnet, dass** die Rippen (16, 17, 18, 19, 20, 21, 22) des ersten Mittelstückelements (7) und des zweiten Mittelstückelements (8) so gestaltet sind, dass sie auf ihrer dem jeweils zugeordneten elastischen Ausgleichselement (3, 5) zugewandten Seite Freiräume (11) aufweisen, die im Betrieb für Bewegungen des Mittelstücks (6) erforderlich sind, welche durch den Versatzausgleich verursacht werden.

3. Ausgleichskupplung (1) nach Anspruch 1 oder 2, **dadurch gekennzeichnet, dass** die Rippen (16, 17, 18, 19, 20, 21, 22) geradlinig von einem Kraftangriffspunkt (9a, 9b, 9c, 9d, 9e, 9f) in Richtung eines jeweils benachbarten Kraftangriffspunktes (9a, 9b, 9c, 9d, 9e, 9f) verlaufen.

4. Ausgleichskupplung (1) nach einem der vorgenannten Ansprüche, **dadurch gekennzeichnet, dass** die Kraftangriffspunkte (9a, 9b, 9c, 9d, 9e, 9f) jedes Mittelstückelements jeweils in Umfangsrichtung abwechselnd Durchgangsbohrungen (14) und Gewindebohrungen (15) aufweisen.

5. Ausgleichskupplung (1) nach einem der vorgenannten Ansprüche, **dadurch gekennzeichnet, dass** der radiale Abstand aller Kraftangriffspunkte (9a, 9b, 9c, 9d, 9e, 9f) zu einer Rotationsachse (10) des Mittelstücks (6) gleich groß ist.

6. Ausgleichskupplung (1) nach einem der vorgenannten Ansprüche, **dadurch gekennzeichnet, dass** das erste Mittelstückelement (7) und das zweite Mittelstückelement (8) so ausgeführt und zusammengebaut sind, dass bei dem zusammengebauten Mittelstück (6) jeweils eine Rippe (16, 17, 18, 19, 20, 21, 22) des ersten und des zweiten Mittelstückelements (7, 8) in einer gemeinsamen Ebene liegen.

7. Ausgleichskupplung (1) nach Anspruch 6, **dadurch gekennzeichnet, dass** die Summe der Höhen der beiden in der gemeinsamen Ebene liegenden Rippen (17, 22) zwischen zwei benachbarten Kraftangriffspunkten (9a, 9b) zumindest annähernd konstant bleibt.

8. Ausgleichskupplung (1) nach einem der vorgenannten Ansprüche, **dadurch gekennzeichnet, dass** das erste Mittelstückelement (7) und das zweite Mittelstückelement (8) identisch ausgebildet sind.

9. Ausgleichskupplung (1) nach einem der vorgenannten Ansprüche, **dadurch gekennzeichnet, dass** jedes elastische Ausgleichselement (3, 5) als eine Elastomerscheibe mit eingebetteten Fadenpaketen ausgeführt ist.

## Claims

1. Compensating clutch (1) for offset-compensating connection of two shafts, in particular for use in a drive train of a rail vehicle,
having a first connecting flange (2) for connection to a drive shaft,
having at least one first elastic compensating element (3) which is connected to the first connecting flange (2),
having a second connecting flange (4) for connection to a driven shaft,
having at least one second elastic compensating element (5) which is connected to the second connecting flange (4), and
having a middle piece (6) which is arranged between the first and the second elastic compensating element (3, 5),
wherein the middle piece (6) has at least one first middle-piece element (7) and one second middle-piece element (8), which are separably connected to one another,
and wherein, on the first middle-piece element (7) and on the second middle-piece element (8), there are arranged in each case multiple force action points (9a, 9b, 9c, 9d, 9e, 9f) for connection to the in each case assigned elastic compensating element (3, 5), wherein a rib (16, 17, 18, 19, 20, 21, 22) with an axially extending height is arranged in each case between two adjacent force action points (9a, 9b, 9c, 9d, 9e, 9f), wherein the height of each rib (16, 17, 18, 19, 20, 21, 22) varies from a force action point (9a, 9b, 9c, 9d, 9e, 9f) to an adjacent force action point (9a, 9b, 9c, 9d, 9e, 9f), **characterized in that** the height of a rib (16, 17, 18, 19, 20, 21, 22) decreases from a force action point (9a) to a circumferentially adjacent force action point (9b), and **in that** the height of an adjacent rib (16, 17, 18, 19, 20, 21, 22) increases again from the circumferentially adjacent force action point (9b) to the next force action point (9c) .

2. Compensating clutch (1) according to Claim 1, **characterized in that** the ribs (16, 17, 18, 19, 20, 21, 22) of the first middle-piece element (7) and of the second middle-piece element (8) are formed in such a way that, on their side facing towards the in each case assigned elastic compensating element (3, 5), they have clearances (11) which, during operation, are necessary for movements of the middle piece (6) caused by offset compensation.

3. Compensating clutch (1) according to Claim 1 or 2, **characterized in that** the ribs (16, 17, 18, 19, 20, 21, 22) extend in a straight manner from a force action point (9a, 9b, 9c, 9d, 9e, 9f) in the direction of an in each case adjacent force action point (9a, 9b, 9c, 9d, 9e, 9f).

4. Compensating clutch (1) according to one of the preceding claims, **characterized in that** the force action points (9a, 9b, 9c, 9d, 9e, 9f) of each middle-piece element in each case have, in a circumferentially alternating manner, through-bores (14) and threaded bores (15).

5. Compensating clutch (1) according to one of the preceding claims, **characterized in that** the radial distance of all the force action points (9a, 9b, 9c, 9d, 9e, 9f) from an axis of rotation (10) of the middle piece (6) is the same.

6. Compensating clutch (1) according to one of the preceding claims, **characterized in that** the first middle-piece element (7) and the second middle-piece element (8) are designed and assembled in such a way that, when the middle piece (6) is in an assembled state, in each case one rib (16, 17, 18, 19, 20, 21, 22) of the first and one of the second middle-piece element (7, 8) lie in a common plane.

7. Compensating clutch (1) according to Claim 6, **characterized in that** the sum of the heights of the two ribs (17, 22) lying in the common plane remains at least approximately constant between two adjacent force action points (9a, 9b).

8. Compensating clutch (1) according to one of the preceding claims, **characterized in that** the first middle-piece element (7) and the second middle-piece element (8) are of identical design.

9. Compensating clutch (1) according to one of the preceding claims, **characterized in that** each elastic compensating element (3, 5) is in the form of an elastomer disc with embedded thread bundles.

## Revendications

1. Accouplement de compensation (1) pour le raccordement de deux arbres avec compensation du décalage, notamment pour l'utilisation dans une ligne d'entraînement d'un véhicule ferroviaire,
avec une première bride de raccordement (2) pour le raccordement à un arbre d'entraînement,
avec au moins un premier élément de compensation élastique (3) qui est raccordé à la première bride de raccordement (2),
avec une deuxième bride de raccordement (4) pour le raccordement à un arbre entraîné (5),
avec au moins un deuxième élément de compensation élastique (5) qui est raccordé à la deuxième bride de raccordement (4), et
avec une pièce centrale (6), qui est agencée entre le premier et le deuxième élément de compensation élastique (3, 5),
la pièce centrale (6) présentant au moins un premier élément de pièce centrale (7) et un deuxième élément de pièce centrale (8), qui sont raccordés l'un à l'autre de manière séparable,
et plusieurs points d'application de force (9a, 9b, 9c, 9d, 9e, 9f) étant agencés respectivement sur le premier élément de pièce centrale (7) et sur le deuxième élément de pièce centrale (8) pour le raccordement à l'élément de compensation élastique (3, 5) respectivement associé, à chaque fois entre deux points d'application de force voisins (9a, 9b, 9c, 9d, 9e, 9f) étant agencée une nervure (16, 17, 18, 19, 20, 21, 22) avec une hauteur s'étendant dans la direction axiale, la hauteur de chaque nervure (16, 17, 18, 19, 20, 21, 22) variant d'un point d'application de force (9a, 9b, 9c, 9d, 9e, 9f) vers un point d'application de force voisin (9a, 9b, 9c, 9d, 9e, 9f), **caractérisé en ce que** la hauteur d'une nervure (16, 17, 18, 19, 20, 21, 22) diminue d'un point d'application de force (9a) vers le point d'application de force (9b) voisin dans la direction circonférentielle, et **en ce que** la hauteur d'une nervure voisine (16, 17, 18, 19, 20, 21, 22) augmente de nouveau du point d'application de force voisin (9b) vers le point d'application de force suivant (9c) .

2. Accouplement de compensation (1) selon la revendication 1, **caractérisé en ce que** les nervures (16, 17, 18, 19, 20, 21, 22) du premier élément de pièce centrale (7) et du deuxième élément de pièce centrale (8) sont conçues de telle sorte qu'elles présentent, sur leur côté tourné vers l'élément de compensation élastique (3, 5) respectivement associé, des espaces libres (11) qui, en fonctionnement, sont nécessaires pour les mouvements de la pièce centrale (6) qui sont provoqués par la compensation du décalage.

3. Accouplement de compensation (1) selon la revendication 1 ou 2, **caractérisé en ce que** les nervures (16, 17, 18, 19, 20, 21, 22) s'étendent en ligne droite depuis un point d'application de force (9a, 9b, 9c, 9d, 9e, 9f) en direction d'un point d'application de force respectivement voisin (9a, 9b, 9c, 9d, 9e, 9f).

4. Accouplement de compensation (1) selon l'une quelconque des revendications précédentes, **caractérisé en ce que** les points d'application de la force (9a, 9b, 9c, 9d, 9e, 9f) de chaque élément de pièce centrale présentent respectivement en alternance dans la direction circonférentielle des alésages traversants (14) et des alésages filetés (15).

5. Accouplement de compensation (1) selon l'une quelconque des revendications précédentes, **caractérisé en ce que** la distance radiale de tous les points d'application de force (9a, 9b, 9c, 9d, 9e, 9f) à un axe de rotation (10) de la pièce centrale (6) est égale.

6. Accouplement de compensation (1) selon l'une quelconque des revendications précédentes, **caractérisé en ce que** le premier élément de pièce centrale (7) et le deuxième élément de pièce centrale (8) sont réalisés et assemblés de telle sorte que, dans la pièce centrale (6) assemblée, une nervure (16, 17, 18, 19, 20, 21, 22) du premier et du deuxième élément de pièce centrale (7, 8) se situent respectivement dans un plan commun.

7. Accouplement de compensation (1) selon la revendication 6, **caractérisé en ce que** la somme des hauteurs des deux nervures (17, 22) situées dans le plan commun reste au moins approximativement constante entre deux points d'application de force (9a, 9b) voisins.

8. Accouplement de compensation (1) selon l'une quelconque des revendications précédentes, **caractérisé en ce que** le premier élément de pièce centrale (7) et le deuxième élément de pièce centrale (8) sont configurés de manière identique.

9. Accouplement de compensation (1) selon l'une quelconque des revendications précédentes, **caractérisé en ce que** chaque élément de compensation élastique (3, 5) est réalisé sous la forme d'un disque en élastomère avec des paquets de fils incorporés.
